# EUROPEAN PATENT APPLICATION

(11) **EP 3 940 827 A1**
(43) Date of publication of application: **19.01.2022**
(21) Application number: 20770586.4
(22) Date of filing: 20.02.2020
(51) Int. Cl.: H01M 4/86, H01M 4/90, H01M 4/92, H01M 4/96, H01M 8/02, H01M 8/18

(54) **ELECTRODE, REDOX FLOW BATTERY, ELECTRODE MANUFACTURING METHOD, AND ELECTRODE REGENERATION METHOD**

(30) Priority: 12.03.2019 JP 2019045261
(71) Applicant: SUMITOMO ELECTRIC INDUSTRIES, LTD., Osaka-shi, Osaka 541-0041 (JP)
(72) Inventor: IKEGAMI, Takahiro, Osaka-shi, Osaka 541-0041 (JP); DONG, Yongrong, Osaka-shi, Osaka 541-0041 (JP); OYA, Masayuki, Osaka-shi, Osaka 541-0041 (JP); SEKINE, Ryojun, Osaka-shi, Osaka 541-0041 (JP)
(74) Representative: Boult Wade Tennant LLP
(86) International application number: PCT/JP2020/006943
(87) International publication number: WO 2020/184143

(57) **Abstract**

An electrode for a redox flow battery through which an electrolyte is circulated includes a porous body, and reactive particles that contribute to a battery reaction. The reactive particles are pressed against the porous body by a flow of the electrolyte without being immobilized on the porous body.

## Description

### Technical Field

The present disclosure relates to an electrode, a redox flow battery, a method for manufacturing an electrode, and a method for regenerating an electrode.

The present application claims priority based on Japanese Patent Application No. 2019-045261 filed on March 12, 2019, and the entire contents of the Japanese patent application are incorporated herein by reference.

### Background Art

In a redox flow battery disclosed in Patent Literature 1, a woven fabric or nonwoven fabric composed of carbon fibers, that is, a carbon cloth, carbon felt, or the like is used as an electrode for a battery cell.

### Citation List

### Patent Literature

PTL 1: Japanese Unexamined Patent Application Publication No. 2017-27663

### Summary of Invention

An electrode according to the present disclosure is
an electrode for a redox flow battery through which an electrolyte is circulated, the electrode including:
a porous body; and
reactive particles that contribute to a battery reaction,
in which the reactive particles are pressed against the porous body by a flow of the electrolyte without being immobilized on the porous body.

A redox flow battery according to the present disclosure is
a redox flow battery including:
a battery cell; and
a circulation mechanism that circulates an electrolyte to the battery cell,
the battery cell having a positive electrode, a negative electrode, and a membrane disposed between the positive electrode and the negative electrode,
in which at least one of the positive electrode and the negative electrode includes
   a porous body, and
   reactive particles that contribute to a battery reaction, and
the reactive particles are pressed against the porous body by a flow of the electrolyte without being immobilized on the porous body.

A method for manufacturing an electrode according to the present disclosure includes
a step of providing a battery cell of a redox flow battery, the battery cell containing a porous body; and
a step of allowing an electrolyte mixed with reactive particles that contribute to a battery reaction to flow through the porous body to press the reactive particles against the porous body without immobilizing the reactive particles on the porous body.

A method for regenerating an electrode according to the present disclosure includes
a step of performing charging and discharging by circulating an electrolyte to a battery cell having the electrode according to the present disclosure or to a battery cell included in the redox flow battery according to the present disclosure;
a step of measuring a cell resistance of the battery cell; and
a step of replenishing the reactive particles to the electrolyte on the basis of a measurement result of the cell resistance.

### Brief Description of Drawings

[Fig. 1] Figure 1 is a schematic perspective view illustrating an electrode included in a redox flow battery according to Embodiment 1.
[Fig. 2] Figure 2 is an enlarged view illustrating the region surrounded by the broken line circle of the electrode illustrated in Fig. 1 in an enlarged manner.
[Fig. 3] Figure 3 is a schematic view illustrating another example of a reactive particle included in an electrode of a redox flow battery according to Embodiment 1.
[Fig. 4] Figure 4 is an operating principle diagram of a redox flow battery according to Embodiment 1.
[Fig. 5] Figure 5 is a schematic view illustrating a configuration of a redox flow battery according to Embodiment 1.
[Fig. 6] Figure 6 is a schematic view illustrating a configuration of a cell stack included in a redox flow battery according to Embodiment 1.

### Description of Embodiments

### [Problems to be Solved by Present Disclosure]

To improve battery reactivity of an electrode, an increase in the surface area of the electrode is generally conceived. However, as the surface area of the electrode increases, the rate of degradation of the electrode increases. That is, the life of the electrode is shortened.

In view of the above, an object of the present disclosure is to provide an electrode that easily achieves both an improvement in battery reactivity and a longer life.

An object of the present disclosure is to provide a redox flow battery having good battery reactivity over a long period.

Furthermore, an object of the present disclosure is to provide a method for manufacturing an electrode, the method being capable of manufacturing an electrode that easily achieves both an improvement in battery reactivity and a longer life.

In addition, an object of the present disclosure is to provide a method for regenerating an electrode, the method being capable of recovering the performance of an electrode.

### [Advantageous Effects of Present Disclosure]

The electrode according to the present disclosure easily achieves an improvement in battery reactivity and a longer life.

The redox flow battery according to the present disclosure has good battery reactivity over a long period.

The method for manufacturing an electrode according to the present disclosure can manufacture an electrode that easily achieves both an improvement in battery reactivity and a longer life.

The method for regenerating an electrode according to the present disclosure can recover the performance of an electrode.

### «Description of Embodiments of Present Disclosure»

First, aspects of the present disclosure will be listed and described.

(1) An electrode according to an aspect of the present disclosure is
an electrode for a redox flow battery through which an electrolyte is circulated, the electrode including:
a porous body; and
reactive particles that contribute to a battery reaction,
in which the reactive particles are pressed against the porous body by a flow of the electrolyte without being immobilized on the porous body.

The above configuration easily achieves both an improvement in battery reactivity and a longer life. The reason why battery reactivity can be improved is that since the electrode includes the reactive particle, the surface area, that is, the reaction area of the electrode is easily increased. The surface area of the electrode can be easily adjusted by changing the amount of reactive particles. Therefore, the output of a redox flow battery including this electrode can be easily changed. The reason why the life can be extended is that even if the reactive particles are degraded, new reactive particles before degradation are deposited on the surface of the porous body, and thus the performance of the electrode is recovered, although details of the reason will be described later.

Moreover, the above configuration is less likely to cause an increase in the flow resistance of the electrolyte. The reason for this is that since the reactive particles themselves are not immobilized on the porous body, a group of reactive particles pressed against a surface of the porous body can move in response to the flow of the electrolyte so as to reduce the flow resistance.

(2) In one embodiment of the electrode,
the reactive particles include reactive particles having a size larger than a size of pores of the porous body, and
the reactive particles larger than the pores of the porous body include reactive particles that are pressed against opening edges of the pores of the porous body by a flow of the electrolyte without being immobilized on the porous body.

In the above configuration, since the reactive particles include reactive particles having a size larger than a size of pores of the porous body, the surface area, that is, the reaction area of the electrode is easily increased, and the reactive particles are easily deposited on the surface of the porous body.

(3) In one embodiment of the electrode,
a weight of the reactive particles per unit area is 100 g/m² or more and 1,500 g/m² or less.

The electrode having a weight of the reactive particles per unit area, that is, a weight of the reactive particles per 1 m² of the porous body, of 100 g/m² or more includes a large amount of reactive particles with respect to the porous body and thus has good battery reactivity. The electrode having a weight of the reactive particles per unit area of 1,500 g/m² or less does not include an excessively large amount of reactive particles with respect to the porous body and thus easily suppresses an increase in the flow resistance of the electrolyte.

(4) In one embodiment of the electrode,
the reactive particles have a size of 1 µm or more and 100 µm or less.

The reactive particles having a size of 1 µm or more have a sufficiently large size and thus are less likely to increase the flow resistance of the electrolyte. The reactive particles having a size of 100 µm or less have a size that is not excessively large and thus are less likely to decrease battery reactivity.

(5) In one embodiment of the electrode,
a material of the reactive particles contains at least one element selected from the group consisting of C, Pt, Ru, Mo, W, Nb, and Ta.

The reactive particles containing the above elements easily construct an electrode having good battery reactivity.

(6) In one embodiment of the electrode,
the porous body has a porosity of 50% or more and 90% or less.

The porous body having a porosity of 50% or more has a large number of pores. Therefore, the porous body easily constructs an electrode that allows a smooth flow of the electrolyte. The porous body having a porosity of 90% or less does not have an excessively large number of pores. Therefore, this porous body can construct an electrode having good electrical conductivity. Accordingly, the electrode easily constructs an RF battery having good battery reactivity.

(7) In one embodiment of the electrode,
the pores of the porous body have a size of 0.1 µm or more and 100 µm or less.

The porous body having pores with a size of 0.1 µm or more easily suppresses an increase in the flow resistance of the electrolyte. The porous body having pores with a size of 100 µm or less easily catches the reactive particles. Therefore, this porous body easily constructs an electrode having good battery reactivity.

(8) In one embodiment of the electrode,
a material of the porous body contains one material selected from the group consisting of C, Ti, and conductive polymers.

The porous body containing the above material easily constructs an electrode having good battery reactivity.

(9) A redox flow battery according to an aspect of the present disclosure is
a redox flow battery including:
a battery cell; and
a circulation mechanism that circulates an electrolyte to the battery cell,
the battery cell having a positive electrode, a negative electrode, and a membrane disposed between the positive electrode and the negative electrode,
in which at least one of the positive electrode and the negative electrode includes
   a porous body, and
   reactive particles that have a size larger than a size of pores of the porous body and that contribute to a battery reaction, and
the reactive particles are pressed against opening edges of the pores of the porous body by a flow of the electrolyte without being immobilized on the porous body.

The above configuration has good battery reactivity over a long period. The reason for this is that the redox flow battery includes the above-described electrode that easily realizes both an improvement in battery reactivity and a longer life.

(10) A method for manufacturing an electrode according to an aspect of the present disclosure includes
a step of providing a battery cell of a redox flow battery, the battery cell containing a porous body; and
a step of allowing an electrolyte to flow through the porous body, the electrolyte being mixed with reactive particles that have a size larger than a size of pores of the porous body and that contribute to a battery reaction.

The above configuration enables the manufacturing of the above-described electrode including the porous body and the reactive particles. This is because the electrolyte mixed with the reactive particles is allowed to flow through the porous body, and the reactive particles are pressed against opening edges of pores of the porous body by the flow of the electrolyte.

(11) A method for regenerating an electrode according to an aspect of the present disclosure includes
a step of performing charging and discharging by circulating an electrolyte to a battery cell having the electrode according to any one of (1) to (8) or to a battery cell included in the redox flow battery according to (9);
a step of measuring a cell resistance of the battery cell; and
a step of replenishing the reactive particles to the electrolyte on the basis of a measurement result of the cell resistance.

The above configuration enables the performance of the electrode to be recovered. The reason for this is as follows. When the performance of the electrode decreases, an electrolyte to which new reactive particles before degradation are replenished is allowed to flow through the porous body. This flow of the electrolyte enables the new reactive particles to be pressed against opening edges of pores of the porous body or to be deposited on reactive particles on the surface of the porous body.

### «Details of Embodiment of Present Disclosure»

Details of embodiments of the present disclosure will be described below. In the drawings, the same reference numerals denote components with the same names.

### «Embodiment 1»

### [Redox Flow Battery]

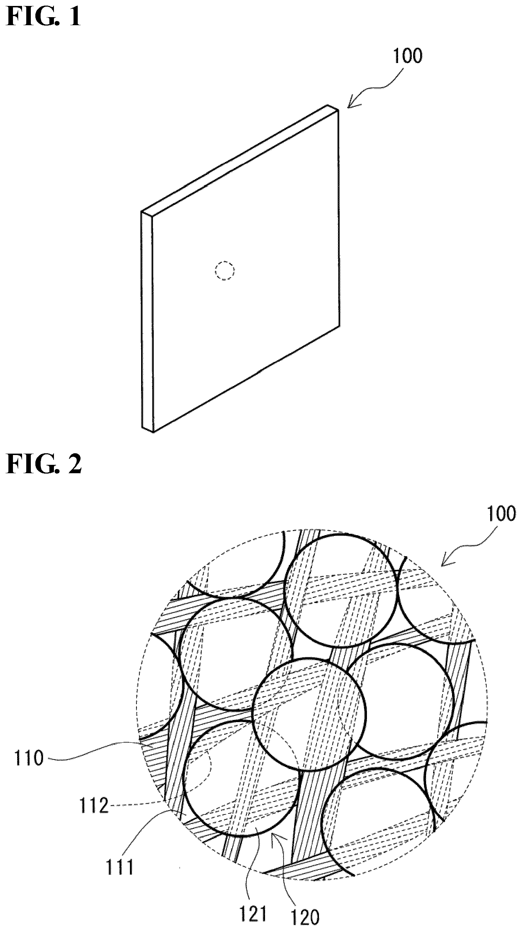

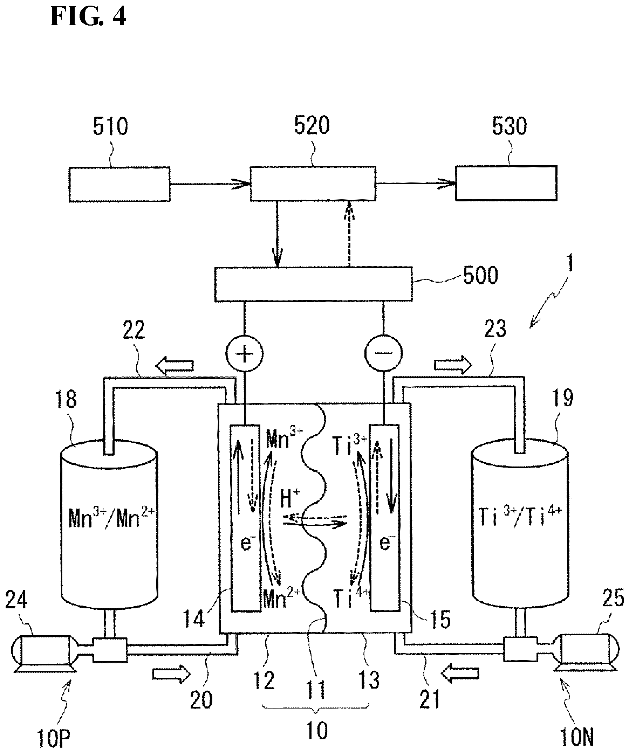

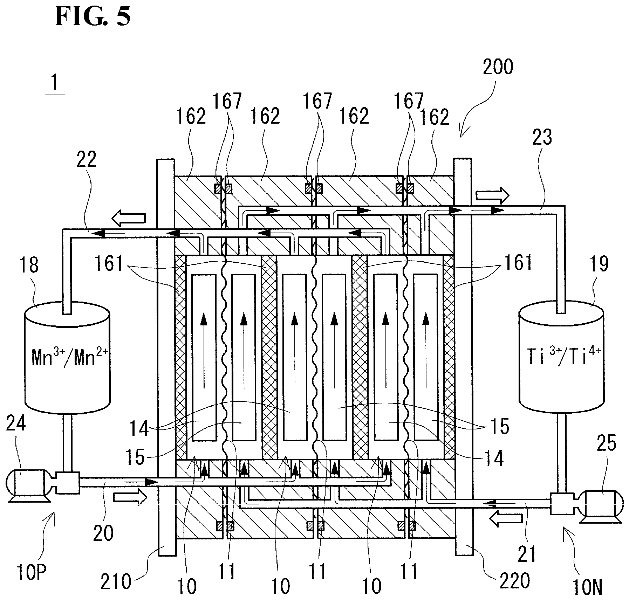

A redox flow battery according to Embodiment 1 will be described with reference to Figs. 1 to 6. Hereinafter, the redox flow battery may be referred to as RF battery 1. As illustrated in Figs. 4 and 5, an RF battery 1 includes a battery cell 10 and circulation mechanisms each of which circulates an electrolyte to the battery cell 10. The battery cell 10 has a positive electrode 14, a negative electrode 15, and a membrane 11 disposed between the positive electrode 14 and the negative electrode 15. One feature of the RF battery 1 of this embodiment lies in that at least one of the positive electrode 14 and the negative electrode 15 is constituted by a specific electrode 100. Hereinafter, the outline and basic configuration of the RF battery 1 will be described, and each configuration of the RF battery 1 according to this embodiment will subsequently be described in detail.

### [Outline of RF battery]

The RF battery 1 is typically connected between a power generation unit 510 and a load 530 via an alternating current/direct current converter 500 and a transformer facility 520, and is charged with power generated by the power generation unit 510 to store the power, or is discharged to supply the stored power to the load 530 (Fig. 4). The solid-line arrow extending from the transformer facility 520 toward the alternating current/direct current converter 500 in Fig. 4 means charging. The broken-line arrow extending from the alternating current/direct current converter 500 toward the transformer facility 520 in Fig. 4 means discharging. Examples of the power generation unit 510 include a solar photovoltaic power generator, a wind power generator, and other general power plants. An example of the load 530 is a consumer of the power. In the RF battery 1, electrolytes containing, as active materials, metal ions whose valence is changed by oxidation/reduction are used as a positive electrolyte and a negative electrolyte. Charging and discharging of the RF battery 1 are performed by using the difference between the oxidation-reduction potential of ions contained in the positive electrolyte and the oxidation-reduction potential of ions contained in the negative electrolyte. In the battery cell 10 in Fig. 4, the solid-line arrows mean charging, and the broken-line arrows mean discharging. For example, the RF battery 1 is used for load leveling, for momentary voltage drop compensation and emergency power sources, and for smoothing the output of natural energy, such as solar photovoltaic power generation or wind power generation that is being introduced on a massive scale.

### [Basic Configuration of RF Battery]

The RF battery 1 includes a battery cell 10 that is separated into a positive electrode cell 12 and a negative electrode cell 13 by a membrane 11 that allows hydrogen ions to permeate therethrough. The positive electrode cell 12 contains a positive electrode 14, and a positive electrolyte is circulated by a positive electrolyte circulation mechanism 10P. The positive electrolyte circulation mechanism 10P includes a positive electrolyte tank 18 that stores the positive electrolyte, a supply pipe 20 and a discharge pipe 22 that connect the positive electrode cell 12 to the positive electrolyte tank 18, and a pump 24 disposed in the supply pipe 20. Similarly, the negative electrode cell 13 contains a negative electrode 15, and a negative electrolyte is circulated by a negative electrolyte circulation mechanism 10N. The negative electrolyte circulation mechanism 10N includes a negative electrolyte tank 19 that stores the negative electrolyte, a supply pipe 21 and a discharge pipe 23 that connect the negative electrode cell 13 to the negative electrolyte tank 19, and a pump 25 disposed in the supply pipe 21.

During an operation in which charging and discharging are performed, the positive electrolyte and the negative electrolyte are supplied, by the pump 24 and the pump 25, from the positive electrolyte tank 18 and the negative electrolyte tank 19 through the supply pipe 20 and the supply pipe 21 to the positive electrode cell 12 and the negative electrode cell 13, respectively. The positive electrolyte and the negative electrolyte are drained from the positive electrode cell 12 and the negative electrode cell 13 through the discharge pipe 22 and the discharge pipe 23 into the positive electrolyte tank 18 and the negative electrolyte tank 19, and thus circulated through the positive electrode cell 12 and the negative electrode cell 13, respectively. During a standby period in which neither charging nor discharging is performed, the pumps 24 and 25 are stopped, and neither the positive electrolyte nor the negative electrolyte is circulated.

### [Electrode]

The electrode 100 according to this embodiment constitutes at least one of the positive electrode 14 and the negative electrode 15 (Figs. 4 to 6) as described above. This electrode 100 includes a porous body 110 and reactive particles 120 that contribute to a battery reaction (Figs. 1 to 3). The reactive particles 120 are pressed against opening edges 112 of pores 111 of the porous body 110 by the flow of an electrolyte.

### (Porous Body)

The porous body 110 holds the reactive particles 120 (Fig. 2). The porous body 110 itself may have a function of contributing to a battery reaction, although it depends on the material of the porous body 110. Herein, "contributing to a battery reaction" includes not only a case where the porous body 110 itself functions as an electrode but also a case where the porous body 110 itself is not involved in the reaction system but functions as a catalyst that promotes a reaction.

### <Material>

The material of the porous body 110 preferably has electrical conductivity. The material of the porous body 110 contains, for example, one material selected from the group consisting of C (carbon), Ti (titanium), Ru (ruthenium), Ir (iridium), W (tungsten), Pt (platinum), Au (gold), Pd (palladium), Mn (manganese), and conductive polymers. The porous body 110 containing any of these materials easily constructs an electrode 100 having good battery reactivity. The porous body 110 may be composed of a single element selected from the above or may be composed of a compound, specifically an oxide, containing any of the above elements. The porous body 110 can contain an element other than the above materials in some cases. Examples of the porous body 110 include graphite, glassy carbon, conductive diamond, conductive diamond-like carbon (DLC), nonwoven fabric composed of carbon fibers, woven fabric composed of carbon fibers, nonwoven fabric composed of cellulose, woven fabric composed of cellulose, carbon paper composed of carbon fibers and a conductive auxiliary agent, and a dimensionally stable electrode (DSE). The material of the porous body 110 is determined by X-ray diffractometry (XRD). Specifically, the material of the porous body 110 is determined by using an Empyrean manufactured by Malvern Panalytical Ltd.

### <Porosity>

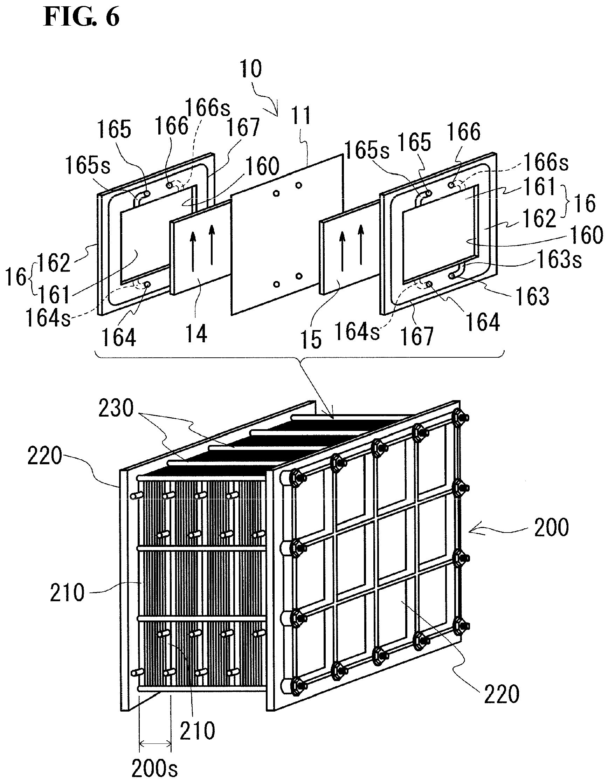

The porous body 110 preferably has a porosity of 50% or more and 90% or less. The porous body 110 having a porosity of 50% or more has a large number of pores 111. Therefore, the porous body 110 easily constructs an electrode 100 that allows a smooth flow of the electrolyte. The porous body 110 having a porosity of 90% or less does not have an excessively large number of pores 111. Therefore, the porous body 110 can construct an electrode 100 having good electrical conductivity. Accordingly, the electrode 100 easily constructs an RF battery 1 having good battery reactivity. The porosity of the porous body 110 is more preferably 60% or more and 80% or less, and particularly preferably 70% or more and 80% or less. The porosity of the porous body 110 refers to a porosity in a compressed state after assembly of a battery cell 10 or a layered body called a substack 200s, which will be described later with reference to the lower part of Fig. 6.

The porosity of the porous body 110 is determined as follows by a mercury intrusion method and a compression test. First, a porosity Po of the porous body 110 in an uncompressed state is determined by the mercury intrusion method. Next, a thickness di of the porous body 110 in a compressed state after assembly of the battery cell 10 or the layered body is determined by the compression test. A compression ratio is determined by comparing a thickness do of the porous body 110 in the uncompressed state with the thickness di of the porous body 110 in the compressed state. A porosity Pi of the porous body 110 in the compressed state is determined from the porosity Po of the porous body 110 in the uncompressed state and the compression ratio. Specifically, the porosity Pi is determined by P₁ = 1 - {(1 - P₀)d₀/d₁ }

### <Size of Pore>

The pores 111 of the porous body 110 preferably have a size of 0.1 µm or more and 100 µm or less. The porous body 110 having pores 111 with a size of 0.1 µm or more easily constructs an electrode 100 that allows a smooth flow of an electrolyte. The porous body 110 having pores 111 with a size of 100 µm or less easily catches the reactive particles 120. Therefore, this porous body 110 easily constructs an electrode 100 having good battery reactivity. The size of the pores 111 of the porous body 110 is more preferably 1 µm or more, preferably 5 µm or more and 50 µm or less, and particularly preferably 10 µm or more and 30 µm or less. The size of the pores 111 of the porous body 110 refers to a size in the compressed state after assembly of the battery cell 10 or the layered body.

The size of the pores 111 of the porous body 110 is determined as follows by X-ray CT (computed tomography) and a mercury intrusion method on CAE (computer aided engineering). A CT image is taken as a three-dimensional image in a state where the porous body 110 is compressed by using a compression fixture. This compression is performed so as to correspond to the compressed state after assembly of the battery cell 10 or the layered body. The CT image can be taken by using Xradia 520 Versa manufactured by Carl Zeiss Microscopy GmbH. The mercury intrusion method is performed on CAE by using the CT image to determine the distribution of pores in the CT image. In the distribution of the pores, D50 is the size of the pores 111 of the porous body 110.

### <Thickness>

The porous body 110 preferably has a thickness of, for example, 0.20 mm or more and 1.00 mm or less. The porous body 110 having a thickness of 0.20 mm or more can increase the size of a reaction field where a battery reaction is performed. The porous body 110 having a thickness of 1.00 mm or less does not have an excessively large thickness and enables the RF battery 1 with a small thickness to be realized. The thickness of the porous body 110 is more preferably 0.30 mm or more and 1.00 mm or less, and particularly preferably 0.40 mm or more and 0.70 mm or less.

The thickness of the porous body 110 refers to a thickness in the uncompressed state before assembly of the battery cell 10 or the layered body. The thickness of the porous body 110 is an average value of thicknesses at five or more positions. A thickness of the porous body 110 in the compressed state after assembly of the battery cell 10 or the layered body is preferably, for example, 0.20 mm or more and 0.60 mm or less.

### (Reactive Particle)

The reactive particles 120 contribute to a battery reaction. As described above, "contributing to a battery reaction" includes not only a case where the reactive particles 120 themselves function as an electrode but also a case where the reactive particles 120 themselves are not involved in the reaction system but function as a catalyst that promotes a reaction. Note that at least either of the porous body 110 and the reactive particles 120 may function as an electrode. That is, the material of at least either of the porous body 110 and the reactive particles 120 may have electrical conductivity.

The reactive particles 120 are pressed against the porous body 110 by a flow of an electrolyte without being immobilized on the porous body 110. Some of the reactive particles 120 are pressed against opening edges 112 of pores 111 of the porous body 110. Specifically, the pressure due to the flow of the electrolyte prevents the reactive particles 120 from falling off from the porous body 110. When the flow of the electrolyte is stopped, the reactive particles 120 are separated from the porous body 110. That is, "immobilization" as used herein means that separation of the reactive particles 120 from the porous body 110 is prevented even when a flow of an electrolyte is stopped. Since the reactive particles 120 are not immobilized on the porous body 110, an increase in the flow resistance of the electrolyte is less likely to occur. The reason for this is that a group of reactive particles 120 pressed against a surface of the porous body 110 can move in response to the flow of the electrolyte so as to reduce the flow resistance.

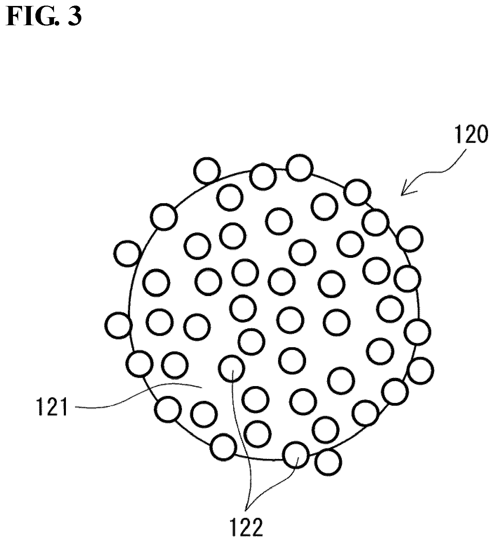

Each of the reactive particles 120 may be formed of a base 121 alone (Fig. 2) or may be formed of a base 121 and fine particles 122 adhering to the surface of the base 121 (Fig. 3). The base 121 is a large particle that occupies most of the reactive particle 120. The fine particles 122 are a plurality of particles that are smaller than the base 121 and that adhere to the surface of the base 121. When the reactive particle 120 is formed of the base 121 and the fine particles 122, one of the base 121 and the fine particles 122 may function as a catalyst and the other may function as an electrode, or both the base 121 and the fine particles 122 may function as a catalyst or an electrode. The fine particles 122 are allowed to adhere to the surface of the base 121 by depositing, in the form of projections, a constituent material of the base 121 in a molten state on the surface of the base 121 or allowed to adhere to the surface of the base 121 by sputtering.

### <Material>

The material of the reactive particles 120 preferably contains at least one element selected from the group consisting of C, Pt, Ru, Ti, Ir, Mo (molybdenum), W, Nb (niobium), and Ta (tantalum). The reactive particles 120 containing the above elements easily construct an electrode 100 having good battery reactivity. The reactive particles 120 may be composed of a single element selected from the above or may be composed of a compound, specifically an oxide, containing any of the above elements. The oxide may be, for example, one oxide selected from the group consisting of Nb₂ O₅, WO₃, TiO₂, RuO₂, IrO₂, and MnO₂. The material of each of the reactive particles 120 refers to the material of the base 121 when the reactive particle 120 is formed of the base 121 alone, and refers to the materials of the base 121 and the fine particles 122 when the reactive particle 120 is formed of the base 121 and the fine particles 122. When the reactive particle 120 is formed of the base 121 and the fine particles 122, the material of the base 121 and the material of the fine particles 122 may be the same material or materials that are different from each other. The material of the reactive particles 120 is determined by XRD using the same apparatus as that used for the porous body 110.

### <Shape>

The reactive particles 120 may have one shape selected from the group consisting of a spherical shape, an ellipsoidal shape, a scaly shape, an acicular shape, a polygonal columnar shape, a columnar shape, and an elliptical cylindrical shape. The ellipsoidal shape includes a prolate spheroidal shape and an oblate spheroidal shape. The ranges of the "spherical shape", "ellipsoidal shape", "scaly shape", "acicular shape", "polygonal columnar shape", "columnar shape", and "elliptical cylindrical shape" described herein include not only a spherical shape, an ellipsoidal shape, a scaly shape, an acicular shape, a polygonal columnar shape, a columnar shape, and an elliptical cylindrical shape in a geometrical sense but also shapes that are substantially regarded as a spherical shape, an ellipsoidal shape, a scaly shape, an acicular shape, a polygonal columnar shape, a columnar shape, and an elliptical cylindrical shape. For example, the "polygonal columnar shape" includes a shape having rounded corner portions. The shape of each of the reactive particles 120 refers to the shape of the base 121 when the reactive particle 120 is formed of the base 121 alone, and refers to the shapes of the base 121 and the fine particles 122 when the reactive particle 120 is formed of the base 121 and the fine particles 122. The shape of the base 121 and the shape of the fine particles 122 may be the same shape or shapes that are different from each other.

### <Size>

The reactive particles 120 preferably include particles having a size larger than the size of the pores 111 of the porous body 110. Reactive particles 120 that satisfy this magnitude relation are pressed against the porous body 110, in particular, opening edges 112 of the pores 111 of the porous body 110 by a flow of an electrolyte. The reactive particles 120 preferably have a size of 1 µm or more and 100 µm or less. The reactive particles 120 having a size of 1 µm or more have a sufficiently large size and thus are less likely to increase the flow resistance of the electrolyte. The reactive particles 120 having a size of 100 µm or less have a size that is not excessively large and thus are less likely to decrease battery reactivity. In particular, reactive particles 120 having a size larger than the size of the pores 111 of the porous body 110 preferably have a size that satisfies the above range.

The size of each of the reactive particles 120 refers to the size of the base 121 when the reactive particle 120 is formed of the base 121 alone, and refers to the size of the whole particle when the reactive particle 120 is formed of the base 121 and the fine particles 122. The size of the reactive particles 120 is D50 measured by laser diffraction/scattering particle size distribution measurement. The D50 refers to a particle size that corresponds to 50% in a cumulative distribution curve based on the mass. The D50 is determined by using Microtrac MT3300EXII manufactured by MicrotracBEL Corp. The reactive particles 120 are detached from the porous body 110 by stopping the flow of the electrolyte or by allowing the electrolyte to flow backward. The D50 of all the reactive particles 120 can be determined by collecting all the detached reactive particles 120. The D50 of reactive particles 120 having a size larger than the size of the pores 111 of the porous body 110 can be determined by separating, from all the detached reactive particles 120, only reactive particles 120 having a size larger than the size of the pores 111 of the porous body 110.

### <Weight per Unit Area>

The weight of the reactive particles 120 per unit area, that is, the weight of the reactive particles 120 per 1 m² of the porous body 110 is preferably 100 g/m² or more and 1,500 g/m² or less. The electrode 100 having a weight of the reactive particles 120 per unit area of 100 g/m² or more includes a large amount of reactive particles 120 with respect to the porous body 110 and thus has good battery reactivity. The reaction area of the electrode 100 can be easily adjusted by changing the weight per unit area. Therefore, the output of the RF battery 1 can be easily changed. The electrode 100 having a weight of the reactive particles 120 per unit area of 1,500 g/m² or less does not include an excessively large amount of reactive particles 120 with respect to the porous body 110 and thus easily suppresses an increase in the flow resistance of the electrolyte. The weight of the reactive particles 120 per unit area is more preferably 100 g/m² or more and 500 g/m² or less, and particularly preferably 150 g/m² or more and 500 g/m² or less. In particular, reactive particles 120 having a size larger than the size of the pores 111 of the porous body 110 preferably have a weight per unit area that satisfies the above range.

The weight of the reactive particles 120 per unit area is determined by dividing the total weight of the reactive particles 120 by the total area of the porous body 110. The total weight of the reactive particles 120 can be measured by detaching all the reactive particles 120 from the porous body 110 to collect all the reactive particles 120, as described above. The weight of reactive particles 120 per unit area, the reactive particles 120 having a size larger than the size of the pores 111 of the porous body 110, is determined by dividing the total weight of the reactive particles 120 having a size larger than the size of the pores 111 of the porous body 110 by the total area of the porous body 110. The total weight of the reactive particles 120 having a size larger than the size of the pores 111 of the porous body 110 can be measured by separating, from all the detached reactive particles 120, only reactive particles 120 having a size larger than the size of the pores 111 of the porous body 110, as described above.

### [Cell Stack]

The battery cell 10 is usually formed inside a structure called a cell stack 200, as illustrated in Fig. 5 and the lower part of Fig. 6. As illustrated in the lower part of Fig. 6, the cell stack 200 is configured such that layered bodies called substacks 200s are sandwiched between two end plates 220 on both sides and the two end plates 220 are fastened with a fastening mechanism 230. The lower part of Fig. 6 illustrates, as an example, an embodiment in which a plurality of substacks 200s are provided. As illustrated in Fig. 5 and the upper part of Fig. 6, each of the substacks 200s has a configuration in which pluralities of cell frames 16, positive electrodes 14, membranes 11, and negative electrodes 15 are stacked in this order. As illustrated in the lower part of Fig. 6, supply/drainage plates 210 are disposed on both ends of each layered body of the substack 200s.

### [Cell Frame]

A cell frame 16 includes a bipolar plate 161 and a frame body 162 that surrounds an outer peripheral portion of the bipolar plate 161 and is configured so that a surface of the bipolar plate 161 and inner peripheral surfaces of the frame body 162 form a recess 160 in which a positive electrode 14 or a negative electrode 15 is disposed. One battery cell 10 is formed between bipolar plates 161 of adjacent cell frames 16. A positive electrode 14 and a negative electrode 15 of adjacent battery cells 10 are disposed with a bipolar plate 161 therebetween, on the front side and the back side of the bipolar plate 161, and a positive electrode cell 12 and a negative electrode cell 13 are thus disposed. A recess may be formed in the surface of the bipolar plate 161 so as to facilitate the flow of an electrolyte. The shape of this recess can be appropriately selected and may be, for example, a known opposed comb-tooth shape.

There are two types of cell frames 16, namely, an intermediate cell frame disposed between adjacent battery cells 10 (Figs. 4 to 6) of the layered body, and an end cell frame disposed on both ends of the layered body. In the intermediate cell frame, the front surface and the back surface of the bipolar plate 161 contact a positive electrode 14 of one battery cell 10 and a negative electrode 15 of the other battery cell 10. In the end cell frame, one surface of the bipolar plate 161 contacts one of the positive electrode 14 and the negative electrode 15 of a battery cell 10, and no electrode is disposed on the other surface of the bipolar plate 161. The configurations of the front and back surfaces, that is, the surface on the positive-electrode side and the surface on the negative-electrode side, of the cell frame 16 are the same for the intermediate cell frame and the end cell frame.

The frame body 162 supports the bipolar plate 161 and forms an inner region serving as a battery cell 10. The frame body 162 has a rectangular frame shape, and the opening of the recess 160 has a rectangular shape. The frame body 162 includes a liquid supply-side piece and a liquid drainage-side piece facing the liquid supply-side piece. In plan view of the cell frame 16, when a direction in which the liquid supply-side piece and the liquid drainage-side piece face each other is defined as a vertical direction and a direction orthogonal to the vertical direction is defined as a horizontal direction, the liquid supply-side piece is located on the lower side in the vertical direction, and the liquid drainage-side piece is located on the upper side in the vertical direction. The liquid supply-side piece has liquid supply manifolds 163 and 164 and liquid supply slits 163s and 164s through which electrolytes area supplied to the inside of the battery cell 10. The liquid drainage-side piece has liquid drainage manifolds 165 and 166 and liquid drainage slits 165s and 166s through which electrolytes are drained to the outside of the battery cell 10. The electrolytes flow in a direction from the lower side of the frame body 162 in the vertical direction toward the upper side of the frame body 162 in the vertical direction.

The liquid supply-side piece may have a liquid supply flow-straightening portion that is formed in an inner edge thereof and that diffuses an electrolyte flowing through the liquid supply slit 163s or 164s into a region along the inner edge. Illustration of the liquid supply flow-straightening portion is omitted. The liquid drainage-side piece may have a liquid drainage flow-straightening portion that is formed in an inner edge thereof and that collects an electrolyte having flowed through the positive electrode 14 or the negative electrode 15 and allows the electrolyte to flow through the liquid drainage slit 165s or 166s. Illustration of the liquid drainage flow-straightening portion is omitted.

The flow of each electrolyte in the cell frame 16 is as follows. The positive electrolyte flows from the liquid supply manifold 163 through the liquid supply slit 163s formed in the liquid supply-side piece on one surface side of the frame body 162 and supplied to the positive electrode 14. The one surface side of the frame body 162 is the front side of the drawing sheet in Fig. 6. Subsequently, the positive electrolyte flows from the lower side to the upper side of the positive electrode 14 as shown by the arrows in the upper part of Fig. 6 and then drained to the liquid drainage manifold 165 through the liquid drainage slit 165s formed in the liquid drainage-side piece. The supply and drainage of the negative electrolyte is the same as those of the positive electrolyte except that the supply and drainage are performed through the liquid supply manifold 164, the liquid supply slit 164s, the liquid drainage slit 166s, and the liquid drainage manifold 166 on the other surface side of the frame body 162. The other surface side of the frame body 162 is the back side of the drawing sheet in Fig. 6.

A ring-shaped sealing member 167, such as an O-ring or flat packing, is disposed in a ring-shaped sealing groove between two adjacent frame bodies 162. This sealing member 167 reduces leakage of the electrolytes from the battery cell 10.

### [Electrolyte]

The positive electrolyte and the negative electrolyte are circulated and supplied to the positive electrode 14 and the negative electrode 15 by the above-described positive electrolyte circulation mechanism 10P and negative electrolyte circulation mechanism 10N, respectively. During this circulation, charging and discharging are performed with a valence-change reaction of active material ions in the positive electrolyte and the negative electrolyte. In the RF battery 1, the positive electrode 14 tends to be degraded by oxidation due to side reactions along with charging and discharging, which is likely to lead to an increase in the cell resistance. Therefore, the cell resistance can be effectively reduced by using the electrode 100 as the positive electrode 14.

The positive electrolyte active material may contain at least one selected from the group consisting of manganese ions, vanadium ions, iron ions, polyacids, quinone derivatives, and amines. The negative electrolyte active material may contain at least one selected from the group consisting of titanium ions, vanadium ions, chromium ions, polyacids, quinone derivatives, and amines. Figures 4 and 5 show manganese (Mn) ions as examples of ions contained in the positive electrolyte and show titanium (Ti) ions as examples of ions contained in the negative electrolyte. In the case of a Mn-Ti electrolyte that contains Mn ions as a positive electrode active material and contains Ti ions as a negative electrode active material, the positive electrode 14 is likely to be degraded by oxidation. Therefore, in the case of the Mn-Ti electrolyte, the cell resistance can be effectively reduced by using the electrode 100 as the positive electrode 14.

The concentration of the positive electrode active material and the concentration of the negative electrode active material can be appropriately selected. For example, at least one of the concentration of the positive electrode active material and the concentration of the negative electrode active material may be 0.3 mol/L or more and 5 mol/L or less. When the concentration is 0.3 mol/L or more, the RF battery 1 can have an energy density, for example, about 10 kWh/m³, which is large enough for a high-capacity storage battery. The higher the concentration, the higher the energy density. Furthermore, the concentration may be 0.5 mol/L or more, 1.0 mol/L or more, in particular, 1.2 mol/L or more, and 1.5 mol/L or more. When the concentration is 5 mol/L or less, solubility in a solvent is easily enhanced. Furthermore, the concentration may be 2 mol/L or less in terms of ease of use. An electrolyte that satisfies this concentration has good manufacturability.

Examples of the solvent of the electrolyte include aqueous solutions that contain at least one acid or an acid salt selected from the group consisting of sulfuric acid, phosphoric acid, nitric acid, and hydrochloric acid.

### [Operation and Effect]

The RF battery 1 according to this embodiment has good battery reactivity over a long period. This is because the RF battery 1 includes the electrode 100 that easily realizes both an improvement in battery reactivity and a longer life. The reason why the battery reactivity can be improved is that since the electrode 100 includes the reactive particles 120, the surface area of the electrode 100 can be increased. The reason why the life can be extended is that even if the reactive particles 120 are degraded, new reactive particles 120 before degradation are deposited on the surface of the porous body 110, and thus the performance of the electrode 100 is recovered, although details of the reason will be described later. Furthermore, some of the reactive particles 120 may enter the inside of the porous body 110. New reactive particles 120 inside the porous body 110 also recover the performance of the electrode 100.

### [Method for Manufacturing Electrode]

The electrode 100 described above can be manufactured by a method for manufacturing an electrode according to this embodiment, the method including step S1 and step S2 described below.

### (Step S1)

In this step, a battery cell 10 or a cell stack 200 of an RF battery 1 is prepared. This battery cell 10 or cell stack 200 is as described in the battery cell 10 or cell stack 200 above. In the battery cell 10 or the cell stack 200, a porous body 110 is placed between a bipolar plate 161 and a membrane 11. This porous body 110 is the same as the porous body 110 in the electrode 100 described above.

### (Step S2)

In this step, an electrolyte is allowed to flow through the porous body 110. Reactive particles 120 that contribute to a battery reaction are mixed with this electrolyte. The reactive particles 120 are the same as the reactive particles 120 in the electrode 100 of Embodiment 1 described above. The mixing of the reactive particles 120 may be performed in advance outside the positive electrolyte tank 18 by using a suitable container. Alternatively, the mixing of the reactive particles 120 may be performed in the positive electrolyte tank 18 that stores an electrolyte by putting the reactive particles 120 in the tank. The positive electrolyte circulation mechanism 10P described above can be used to allow the electrolyte to flow. The flow path of the electrolyte is as described above.

Specifically, the electrolyte passes from the positive electrolyte tank 18 through the supply pipe 20 and is supplied from the liquid supply manifold 163 and the liquid supply slit 163s of the frame body 162 of the cell frame 16 to the porous body 110. At this time, the reactive particles 120 contained in the electrolyte are pressed against the opening edges 112 of the pores 111 of the porous body 110 by the flow of the electrolyte. The electrode 100 is manufactured by this pressing of the reactive particles 120. Note that some of the reactive particles 120 may enter the inside of the porous body 110.

In the case where the reactive particles 120 are mixed with the negative electrolyte, the negative electrolyte circulation mechanism 10N described above can be used to allow the electrolyte to flow. The flow path of the electrolyte is as described above. Specifically, the electrolyte passes from the negative electrolyte tank 19 through the supply pipe 21 and is supplied from the liquid supply manifold 164 and the liquid supply slit 164s of the frame body 162 of the cell frame 16 to the porous body 110.

### [Operation and Effect]

The method for manufacturing an electrode according to this embodiment can manufacture the electrode 100 that easily achieves both an improvement in battery reactivity and a longer life. This is because the electrolyte mixed with the reactive particles 120 is allowed to flow through the porous body 110, and the reactive particles 120 are thereby pressed against the opening edges 112 of the pores 111 of the porous body 110. Therefore, the reactive particles 120 can be deposited on the surface of the porous body 110, and some of the reactive particles 120 can be allowed to enter the inside of the porous body 110.

### [Method for Regenerating Electrode]

The electrode 100 described above can be regenerated, that is, the performance of the electrode 100 can be recovered, by a method for regenerating an electrode, the method including step S11 to step S13 described below.

### (Step S11)

In this step, charging and discharging of an RF battery 1 are performed. This RF battery 1 is as described in the RF battery 1 above. Specifically, the electrode 100 of this RF battery 1 is the above-described electrode 100 including the porous body 110 and the reactive particles 120. Charging and discharging of the RF battery 1 are performed by circulating electrolytes to the battery cell 10. The electrolytes can be circulated by using the positive electrolyte circulation mechanism 10P and the negative electrolyte circulation mechanism 10N described above.

### (Step S12)

In this step, a cell resistance of the battery cell 10 is measured. The cell resistance is determined from an open circuit voltage measured with a monitor cell and a charge-discharge current measured with an ammeter included in the alternating current/direct current converter 500. Illustration of the monitor cell is omitted. The monitor cell is a battery cell which has the same configuration as that of the battery cell 10, to which the alternating current/direct current converter 500 is not connected, and which does not contribute to charging and discharging.

### (Step S13)

In this step, the reactive particles 120 are replenished to an electrolyte on the basis of the measured cell resistance of the battery cell 10. The reactive particles 120 are replenished when the cell resistance of the battery cell 10 exceeds a threshold set in advance. The amount of reactive particles 120 replenished is determined from, for example, results obtained by operating a test battery in advance to determine the relation between the amount of reactive particles 120 replenished and the degree of reduction in the cell resistance. The reactive particles 120 to be replenished contribute to the battery reaction and are the same as the reactive particles 120 in the electrode 100 described above.

The replenishment position of the reactive particles 120 may be the positive electrolyte tank 18. Alternatively, the replenishment position of the reactive particles 120 may be located downstream of the pump 24 in the supply pipe 20. Specifically, the replenishment position of the reactive particles 120 may be between the pump 24 and the battery cell 10. The replenishment of the reactive particles 120 may be performed from an opening of the positive electrolyte tank 18 by opening a top panel of the positive electrolyte tank 18. Alternatively, a replenishment opening may be separately provided downstream of the pump 24 in the supply pipe 20, and the replenishment of the reactive particles 120 may be performed from the replenishment opening. The replenishment opening is closed when the replenishment of the reactive particles 120 is not performed. The replenishment position of the reactive particles 120 may be the negative electrolyte tank 19. Alternatively, the replenishment position of the reactive particles 120 may be located downstream of the pump 25 in the supply pipe 21. Specifically, the replenishment position of the reactive particles 120 may be between the pump 25 and the battery cell 10. The replenishment of the reactive particles 120 may be performed from an opening of the negative electrolyte tank 19 by opening a top panel of the negative electrolyte tank 19. Alternatively, a replenishment opening may be separately provided downstream of the pump 25 in the supply pipe 21, and the replenishment of the reactive particles 120 may be performed from the replenishment opening.

The timing of the replenishment of the reactive particles 120 is preferably after the pump 24 is stopped to stop the flow of an electrolyte. After the completion of replenishment, the RF battery 1 drives the pump 24 to circulate the electrolyte. By this circulation, the reactive particles 120 contained in the electrolyte are pressed against the opening edges 112 of the pores 111 of the porous body 110 or deposited on reactive particles 120 on the surface of the porous body 110. Furthermore, some of the reactive particles 120 may enter the inside of the porous body 110. In the case where the reactive particles 120 are replenished to the negative electrolyte, the timing of the replenishment of the reactive particles 120 is preferably after the pump 25 is stopped to stop the flow of the electrolyte. After the completion of replenishment, the RF battery 1 drives the pump 25 to circulate the electrolyte.

### [Operation and Effect]

The method for regenerating an electrode according to this embodiment can recover the performance of the electrode 100. The reason for this is as follows. When the performance of the electrode 100 decreases, an electrolyte to which new reactive particles 120 before degradation are replenished is allowed to flow through the porous body 110. This flow of the electrolyte enables the new reactive particles 120 to be pressed against the opening edges 112 of the pores 111 of the porous body 110, to be deposited on reactive particles 120 on the surface of the porous body 110, or to enter the inside of the porous body 110.

The present invention is not limited to the examples described above but is defined by the appended claims. The present invention is intended to cover all modifications within the meaning and scope equivalent to those of the claims.

### Reference Signs List

1 RF battery
100 electrode
   110 porous body
      111 pore
      112 opening edge
   120 reactive particle
      121 base
      122 fine particle
10 battery cell
11 membrane
12 positive electrode cell
   14 positive electrode
13 negative electrode cell
   15 negative electrode
16 cell frame
   160 recess
   161 bipolar plate
   162 frame body
   163, 164 liquid supply manifold
   163s, 164s liquid supply slit
   165, 166 liquid drainage manifold
   165s, 166s liquid drainage slit
   167 sealing member
10P positive electrolyte circulation mechanism
ION negative electrolyte circulation mechanism
18 positive electrolyte tank
19 negative electrolyte tank
20, 21 supply pipe
22, 23 discharge pipe
24, 25 pump
200 cell stack
200s substack
210 supply/drainage plate
220 end plate
230 fastening mechanism
500 alternating current/direct current converter
510 power generation unit
520 transformer facility
530 load

## Claims

1. An electrode for a redox flow battery through which an electrolyte is circulated, the electrode comprising:
a porous body; and
reactive particles that contribute to a battery reaction,
wherein the reactive particles are pressed against the porous body by a flow of the electrolyte without being immobilized on the porous body.

2. The electrode according to Claim 1,
wherein the reactive particles include reactive particles having a size larger than a size of pores of the porous body, and
the reactive particles larger than the pores of the porous body include reactive particles that are pressed against opening edges of the pores of the porous body by a flow of the electrolyte without being immobilized on the porous body.

3. The electrode according to Claim 1 or 2, wherein a weight of the reactive particles per unit area is 100 g/m² or more and 1,500 g/m² or less.

4. The electrode according to any one of Claims 1 to 3, wherein the reactive particles have a size of 1 µm or more and 100 µm or less.

5. The electrode according to any one of Claims 1 to 4, wherein a material of the reactive particles contains at least one element selected from the group consisting of C, Pt, Ru, Mo, W, Nb, and Ta.

6. The electrode according to any one of Claims 1 to 5, wherein the porous body has a porosity of 50% or more and 90% or less.

7. The electrode according to any one of Claims 1 to 6, wherein pores of the porous body have a size of 0.1 µm or more and 100 µm or less.

8. The electrode according to any one of Claims 1 to 7, wherein a material of the porous body contains one material selected from the group consisting of C, Ti, and conductive polymers.

9. A redox flow battery comprising:
a battery cell; and
a circulation mechanism that circulates an electrolyte to the battery cell,
the battery cell having a positive electrode, a negative electrode, and a membrane disposed between the positive electrode and the negative electrode,
wherein at least one of the positive electrode and the negative electrode includes
a porous body, and
reactive particles that contribute to a battery reaction, and
the reactive particles are pressed against the porous body by a flow of the electrolyte without being immobilized on the porous body.

10. A method for manufacturing an electrode, comprising:
a step of providing a battery cell of a redox flow battery, the battery cell containing a porous body; and
a step of allowing an electrolyte mixed with reactive particles that contribute to a battery reaction to flow through the porous body to press the reactive particles against the porous body without immobilizing the reactive particles on the porous body.

11. A method for regenerating an electrode, comprising:
a step of performing charging and discharging by circulating an electrolyte to a battery cell having the electrode according to any one of Claims 1 to 8 or to a battery cell included in the redox flow battery according to Claim 9;
a step of measuring a cell resistance of the battery cell; and
a step of replenishing the reactive particles to the electrolyte on the basis of a measurement result of the cell resistance.
